# EUROPEAN PATENT SPECIFICATION

(11) **EP 2 108 793 B1**
(45) Date of publication and mention of the grant of the patent: **07.07.2010**
(21) Application number: 08710590.4
(22) Date of filing: 25.01.2008
(51) Int. Cl.: F01N 3/20, B01D 53/94, F01N 3/08, F01N 3/28

(54) **BREAKDOWN DIAGNOSING DEVICE FOR EXHAUST CLEANING SYSTEM, AND BREAKDOWN DIAGNOSING METHOD FOR EXHAUST CLEANING SYSTEM**
VERSAGENSDIAGNOSEVORRICHTUNG FÜR ABGASREINIGUNGSSYSTEM UND VERSAGENSDIAGNOSEVERFAHREN FÜR ABGASREINIGUNGSSYSTEM
DISPOSITIF DE DIAGNOSTIC DE PANNE POUR UN SYSTÈME D'ÉPURATION DE GAZ D'ÉCHAPPEMENT, ET PROCÉDÉ DE DIAGNOSTIC DE PANNE POUR UN TEL SYSTÈME D'ÉPURATION DE GAZ D'ÉCHAPPEMENT

(30) Priority: 02.02.2007 JP 2007024214
(43) Date of publication of application: 14.10.2009
(73) Proprietor: Bosch Corporation, Shibuya-ku Tokyo 150-8360 (JP)
(72) Inventor: KITAZAWA, Eiichi, Higashimatsuyama-shi Saitama 355-8603 (JP)
(74) Representative: Knapp, Thomas
(86) International application number: PCT/JP2008/051089
(87) International publication number: WO 2008/093616

(56) References cited:
- EP-A- 0 915 244
- JP-A- 7 180 535
- JP-A- 07 180 535
- JP-A- 09 203 313
- JP-A- 09 236 569
- JP-A- 2004 092 607
- US-A- 5 851 376
- US-A- 6 092 368

## Description

### Technical Field

The present invention relates to a trouble diagnosis device for an exhaust gas purification system and a trouble diagnosis device for an exhaust gas purification system. Particularly, the present invention relates to trouble diagnosis device and method for an exhaust gas purification system that can perform trouble determination by comparing an NOₓ amount at the upstream side of NOₓ catalyst and an NOₓ amount at the downstream side of the NOₓ catalyst.

### Background Art

Particular matter (hereinafter referred to as PM), NOₓ (NO or NO₂), etc. which may induce a risk of affecting the environment are contained in exhaust gas discharged from an internal combustion engine such as a diesel engine or the like. An exhaust gas purification system using NOₓ catalyst disposed in an exhaust gas passage is known as an exhaust gas purification system used to purify NOₓ out of the above materials.

An exhaust gas purification system using NOₓ storage catalyst and an SCR (Selective Catalytic Reduction) system using selective reduction catalyst are known as such an exhaust gas purification system. Accordingly to the exhaust gas purification system using the NOₓ storage catalyst, NOₓ in exhaust gas is absorbed under the state that the air-fuel ratio of the exhaust gas is under a lean state, and when the air-fuel ratio of the exhaust gas is changed to a rich state, NOₓ is subjected to reductive reaction with hydro carbon (HC) and carbon oxide (CO) in the exhaust gas while NOₓ is discharged, thereby purifying the exhaust gas. Furthermore, the SCR system uses catalyst for selectively reducing NOₓ in exhaust gas and supplies reducing agent mainly containing urea or HC into the exhaust gas so that NOₓ is subjected to reductive reaction with the catalyst, thereby purifying the exhaust gas.

In these exhaust gas purification systems, there is a case where originally-expected reduction of NOₓ does not occur due to some abnormality of the system itself, deterioration of the catalyst, defect of the reducing agent or the like. However, even when the purification efficiency of NOₓ is lowered, no trouble occurs on operation. Therefore, the operation is continued without taking any action. Accordingly, NOₓ is discharged into atmospheric air, which affects the environment.

Therefore, a technique of self-diagnosing reduction of the purification coefficient of NOₓ in the exhaust gas purification system has been proposed. For example, a catalyst deterioration diagnosis device for an internal combustion engine which diagnoses reduction of NOₓ conversion performance due to deterioration of catalyst has been proposed (see Patent Document 1). More specifically, there is disclosed a catalyst deterioration diagnosis device for an internal combustion engine in which NOₓ sensors are provided at the upstream side and downstream side of the catalyst, the output of each NOₓ sensor is measured, the ratio in NOₓ concentration between the upstream and downstream sides of the catalyst, that is, the NOₓ conversion rate is calculated, and a reference value of the NOₓ concentration ratio is set on the basis of the rotational number of the internal combustion engine and the basic fuel injection amount. The NOₓ concentration ratio is compared with the reference value, and the reduction of the NOₓ conversion rate is determined on the basis of the comparison result.

Furthermore, there has been disclosed a method of diagnosing the deterioration of the NOₓ catalyst by estimating the amount of NOₓ captured by the NOₓ catalyst (the NOₓ amount at the upstream side of the NOₓ catalyst) from the operation state of the internal combustion engine, etc. and using an integration value of the NOₓ concentration detected by NOₓ sensor at the downstream side without using the NOₓ concentration itself detected by the NOₓ sensor of the internal combustion engine (for example, see Patent Document 2).

Patent Document 1: JP-A-7-54641 (Scope of Claim for Patent, Fig. 5)
Patent Document 2: JP-A-2005-54604 (Claims 7, 12, paragraphs [0047] to [0048])

### Disclosure of the Invention

### Problem to be solved by the Invention

The purification efficiency of NOₓ may be reduced irrespective of the presence or absence of the catalyst deterioration in accordance with conditions such as the temperature of the NOₓ catalyst, the NOₓ concentration at the upstream side of the NOₓ catalyst, the flow rate of exhaust gas, etc. Furthermore, the purification efficiency of NOₓ may be reduced due to abnormality of the control system for the exhaust gas purification system, defect of reducing agent, deterioration of oxidation catalyst when the oxidation catalyst is disposed at the upstream side of the NOₓ catalyst or the like.
However, the catalyst deterioration diagnosis disclosed in the Patent Document 1 and the Patent document 2 is the deterioration diagnosis which pays no attention to the condition as described above. Therefore, there is a risk that the deterioration is determined to progress more bitterly as compared with the actual catalyst deterioration degree, so that the reliability of the diagnosis result may be lowered.

Therefore, the inventors of this invention have made an earnest effort, and found that the problem as described above can be solved by performing trouble determination on the basis of integrated NOₓ amount only when a predetermined condition is satisfied in the case where the NOₓ amounts at the upstream and downstream sides of NOₓ catalyst are compared with each other to perform the trouble determination of an exhaust gas purification system, thereby implementing this invention. That is, an object of the present invention is to provide a trouble diagnosis device for an exhaust gas purification system and a trouble diagnosis method for an exhaust gas purification system in which the presence or absence of a trouble of the exhaust gas purification system such as abnormality of a control system for the exhaust gas purification system, catalyst deterioration or the like can be determined with high precision, and the reliability of the exhaust gas purification system can be enhanced.

### Means of solving the Problem

According to the present invention, there is provided a trouble diagnosis device for an exhaust gas purification system for passing exhaust gas discharged from an internal combustion engine through NOₓ catalyst to reduce NOₓ contained in the exhaust gas that comprises: upstream-side NOₓ flow rate calculating means for calculating the upstream-side NOₓ flow amount per unit time at the upstream side of the NOₓ catalyst; downstream-side NOₓ flow rate calculating means for calculating a downstream-side NOₓ flow amount per unit time at the downstream side of the NOₓ catalyst; reduction condition determining means for determining whether at least one condition for performing normal reduction of NOₓ is satisfied; upstream-side NOₓ flow amount calculating means for integrating the upstream-side NOₓ flow amount to calculate the amount of upstream-side NOₓ passing through the upstream side of the NOₓ catalyst within a predetermined time when the condition concerned is determined to be satisfied; downstream-side NOₓ amount calculating means for integrating the downstream-side NOₓ flow amount to calculate the amount of downstream-side NOₓ passing through the downstream side of the NOₓ catalyst within a predetermined time when the condition concerned is determined to be satisfied; and trouble determining means for comparing the upstream-side NOₓ amount and the downstream-side NOₓ amount to determine whether the exhaust gas purification system operates normally, whereby the above problem can be solved.

In the construction of the trouble diagnosis device for the exhaust gas purification system according to the present invention, it is preferable that the upstream-side NOₓ amount calculating means and the downstream-side NOₓ amount calculating means store the integration values which have been obtained till now when the integration of the NOₓ flow amount is interrupted, and resume the integration from the stored integration values when the condition concerned is satisfied again.

In the construction of the trouble diagnosis device for the exhaust gas purification system according to the present invention, it is preferred that the upstream-side NOₓ amount calculating means and the downstream-side NOₓ amount calculating means store the integration values which have been obtained till now when the integration of the NOₓ is interrupted, and reset the integration values when the condition concerned is not satisfied again within a predetermined time.

In the construction of the trouble diagnosis device for the exhaust gas purification system according to the present invention, it is preferred that the trouble determining means finishes the integration of the upstream-side NOₓ flow amount and the downstream-side NOₓ flow amount when the upstream-side NOₓ amount reaches a predetermined value, and compares the upstream-side NOₓ amount and the downstream-side NOₓ amount.

Furthermore, in the construction of the trouble diagnosis device for the exhaust gas purification system according to the present invention, it is preferable that the trouble determining means compares the ratio between the upstream-side NOₓ amount and the downstream-side NOₓ amount with a threshold value which is determined in accordance with a condition under which reduction of NOₓ is normally performed.

Still furthermore, in the construction of the trouble diagnosis device for the exhaust gas purification system according to the present invention, it is preferable that the upstream-side NOₓ flow rate calculating means performs the calculation on the basis of an NOₓ concentration discharged from the internal combustion engine which is calculated from an operation state of the internal combustion engine.

Furthermore, according to another aspect of the present invention, a trouble diagnosis method for an exhaust gas purification system for diagnosing the presence or absence of a trouble of an exhaust gas purification system in which exhaust gas discharged from an internal combustion engine is passed through NOₓ catalyst to reduce NOₓ contained in the exhaust gas, comprises: calculating an upstream-side NOₓ flow amount and a downstream-side NOₓ flow amount per unit time at the upstream and downstream sides of the NOₓ catalyst; determining whether at least one condition under which the reduction of NOₓ is normally performed is satisfied or not; integrating the upstream-side NOₓ flow amount and the downstream-side NOₓ flow amount when the condition concerned is satisfied, and calculating an upstream-side NOₓ amount and the downstream-side NOₓ amount passing through the upstream side and the downstream side of the NOₓ catalyst within a predetermined time; and determining comparing the upstream-side NOₓ amount with the downstream-side NOₓ amount to determine whether the exhaust gas purification system operates normally.

### Effect of the Invention

According to the trouble diagnosis device for the exhaust gas purification system according to the present invention, the NOₓ amounts at the upstream side and the downstream side of the NOₓ catalyst which are integrated only when the condition for performing the normal reductive reaction of NOₓ is satisfied are compared with each other, whereby a reduction efficiency when the condition concerned is not satisfied can be excluded from materials for performing the determination. Accordingly, there can be provided the trouble diagnosis device for the exhaust gas purification system that can determine the presence or absence of a trouble of the exhaust gas purification system such as abnormality of a control system for the exhaust gas purification system, deterioration of NOₓ catalyst, reduction of the quality of reducing agent or the like.

Furthermore, in the trouble diagnosis device for the exhaust gas purification system according to the present invention, when the integration of the NOₓ flow amount is interrupted and then resumed, the integration is resumed from the integration value at the interruption time, whereby the trouble diagnosis can be efficiently performed without starting the trouble diagnosis from the beginning even when the operation state of the internal combustion engine is unstable.

Still furthermore, in the trouble diagnosis device for the exhaust gas purification system according to the present invention, the integration value is reset when the time period for which the integration of the NOₓ flow amount is interrupted is continued for a predetermined time or more, whereby reliability of a determination result can be enhanced.

Still furthermore, in the trouble diagnosis device for the exhaust gas purification system according to the present invention, the integration is finished when he upstream-side NOₓ amount reaches a predetermined value, and the upstream-side NOₓ amount and the downstream-side NOₓ amount are compared with each other, whereby a time required for the trouble diagnosis can be prevented from being excessively lengthened, so that the efficient trouble diagnosis can be performed.

Still furthermore, in the trouble diagnosis device for the exhaust gas purification system according to the present invention, the trouble determination is carried out by comparing the reduction efficiency of NOₓ with a predetermined threshold value, whereby the determination can be properly performed in accordance with the operation state of the internal combustion engine or the like.

Still furthermore, in the trouble diagnosis method for the exhaust gas purification system according to the present invention, the upstream-side NOₓ flow amount is calculated, not on the basis of a detection value obtained by an NOₓ sensor, but on the basis of an estimation value estimated from the operation state of the internal combustion engine, whereby the number of NOₓ sensors is reduced and the increase of the cost can be suppressed.

Still furthermore, according to the trouble diagnosis method for the exhaust gas purification system according to the present invention, the reduction efficiency under the state that the condition for performing the normal reductive reaction of NOₓ is not satisfied is excluded from materials for performing the determination. Accordingly, the presence or absence of a trouble of the exhaust gas purification system such as abnormality of the control system for the exhaust gas purification system, deterioration of the NOₓ catalyst, reduction of the quality of reducing agent or the like can be determined with high precision.

### Brief Description of the Drawings

[Fig. 1] is a diagram showing an example of the construction of an exhaust gas purification system according to an embodiment of the present invention.
[Fig. 2] is a block diagram showing an example of the construction of a trouble diagnosis device for the exhaust gas purification system.
[Fig. 3] is timing chart showing how to integrate an NOₓ flow amount.
[Fig. 4] is a flowchart (part 1) showing an example of a trouble diagnosis method for the exhaust gas purification system according to the embodiment of the present invention.
[Fig. 5] is a flowchart (part 2) showing an example of the trouble diagnosis method for the exhaust gas purification system according to the embodiment of the present invention.
[Fig. 6] is a flowchart (part 3) showing an example of the trouble diagnosis method for the exhaust gas purification system according to the embodiment of the present invention. Best Modes for carrying out the Invention

Embodiments concerning a trouble diagnosis device for an exhaust gas purification system and a trouble diagnosis method for an exhaust gas purification system according to the present invention will be described specifically with reference to the drawings. However, these embodiments are examples of the present invention. Accordingly, the present invention is not limited to these embodiments, and thus these embodiments may be arbitrarily altered within the scope of the present invention.
In the figures, the same reference numerals represent the same members, and the description is fitly omitted.

### 1. Trouble Diagnosis Device for Exhaust Gas purification System

### (1) Whole construction of exhaust gas purification system

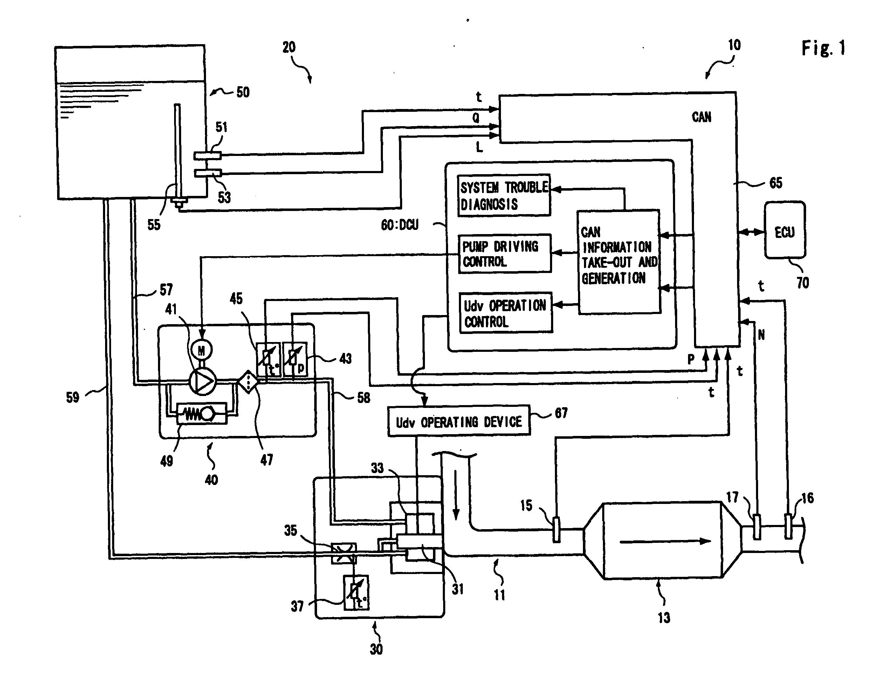

First, an example of the construction of an exhaust gas purification system having a trouble diagnosis device for an exhaust gas purification system according to an embodiment (hereinafter referred to as "system" in some cases) will described with reference to Fig. 1.
An exhaust gas purification system 10 shown in Fig. 1 uses urea water solution as reducing agent, and passes exhaust gas through NOₓ catalyst 13 together with the reducing agent to selectively reduce NOₓ. The exhaust gas purification system 10 has a NOₓ catalyst 13 which is disposed at some point of an exhaust gas passage 11 connected to an internal combustion engine and selectively reduces NOₓ contained in exhaust gas, and a reducing agent supply device 20 containing a reducing agent injection valve 31 for injecting reducing agent into the exhaust gas passage 11 at the upstream side of the NOₓ catalyst 13. Temperature sensors 15 and 16 are disposed at the upstream side and the downstream side of the NOₓ catalyst 13 of the exhaust gas passage 11 respectively, and also an NOₓ sensor 17 as downstream-side NOₓ concentration calculating means is disposed at the downstream side of the NOₓ catalyst 13. The constructions of the NOₓ catalyst 13, the temperature sensors 15, 16 and the NOₓ sensor 17 are not limited to specific ones, and well-known members may be used.
However, in the exhaust gas purification system of this embodiment, at least the NOₓ sensor 17 has a trouble diagnosis function for the sensor itself, and outputs error information to CAN (Controller Area Network) 65 described later when an abnormal state is detected.

The reducing agent supply device 20 has an injection module 30 containing a reducing agent injection valve 31, a storage tank 50 in which reducing agent is stocked, a pump module 40 containing a pump 41 for pressure-feeding the reducing agent in the storage tank 50 to the reducing agent injection valve 31, and a control unit (hereinafter referred to as "DCU: Dosing Control unit") 60 for controlling the injection module 30 and the pump module 40 to control the injection amount of the reducing agent to be injected from the reducing agent injection valve 31. The storage tank 50 and the pump module 40 are connected to each other through a first supply passage 57, the pump module 40 and the injection module 30 are connected to each other through a second supply passage 58, and the injection module 30 and the storage tank 50 are connected to each other through a circulation passage 59.

In the example of the exhaust gas purification system 10 shown in Fig. 1, DCU 60 is connected to CAN 65. CAN 65 is connected to a control unit (hereinafter referred to as "ECU: Engine Control Unit" in some cases) 70 for controlling the operation state of the internal combustion engine. Not only information concerning the operation state of the internal combustion engine such as a fuel injection amount, an injection timing, a rotational number, etc. are written in CAN 65, but also information of all sensors, etc. provided to the exhaust gas purification system 10 are written in CAN 65. In CAN 65, it can be determined whether an input signal value is within a standard range or not of CAN 65. DCU 60 connected to CAN 65 can read information on CAN 65, and also output information onto CAN 65.
In this embodiment, ECU 70 and DCU 60 comprise separate control units, and can communicate information with each other through CAN 65. However, ECU 70 and DCU 60 may be constructed as a single control unit.

The storage tank 50 is provided with a temperature sensor 51 for detecting the temperature of reducing agent in the tank, a level sensor 55 for detecting the residual amount of reducing agent and a quality sensor 53 for detecting quality such as viscosity, concentration, etc. of reducing agent. Values detected by these sensors are output as signals and written onto CAN 65. Well-know parts may be properly used as these sensors.
Urea water solution, hydro carbon (HC) is mainly used as the reducing agent to be stocked, and the exhaust gas purification system of this embodiment is constructed to use urea water solution.

The pump module 40 has a pump 41, a pressure sensor 43 as pressure detecting means for detecting the pressure in the second supply passage 58 at the downstream of the pump 41 (hereinafter referred to as "pressure of reducing agent" in some cases), a temperature sensor 45 for detecting the temperature of reducing agent to be pressure-fed, a foreign material collecting filter 47 disposed at some position of the second supply passage 58 at the downstream side of the pump 41, and a pressure control valve 49 for returning a part of the reducing agent from the downstream side of the pump 41 to the upstream side of the pump 41 to reduce the pressure when the pressure of the reducing agent at the downstream side of the pump 41 exceeds a predetermined value.
The pump 41 comprises an electrically-operated pump, for example, and it is driven on the basis of a signal transmitted from DCU 60. Well-known sensors may be properly used as the pressure sensor 43 and the temperature sensor 45. Values detected by these sensors are output as signals, and written onto CAN 65. Furthermore, a well-known check valve or the like may be used as the pressure control valve 49.

The injection module 30 has a pressure chamber 33 in which reducing agent pressure-fed from the pump module 40 side is stocked, a reducing agent injection valve 31 connected to the pressure chamber 33, an orifice 35 disposed at some position of a passage extending from the pressure chamber 33 and intercommunicating with the circulation passage 59, and a temperature sensor 37 disposed just before the orifice 35.
The reducing agent injection valve 31 comprises an ON-OFF valve for controlling ON-OFF of valve opening through duty control, for example. Furthermore, in the pressure chamber 33, the reducing agent pressure-fed from the pump module 40 is stocked under a predetermined pressure, and the reducing agent is injected into the exhaust gas passage 11 when the reducing agent injection valve 31 is opened on the basis of a control signal transmitted from DCU 60. The orifice 35 is disposed in the passage at the downstream side of the pressure chamber 33, so that the internal pressure of the pressure chamber 33, the second supply passage 58 at the upstream side of the orifice 35 is not lowered easily, and thus the output of the pump module 40 can be suppressed to a low value. As not shown, a valve for performing circulation control of reducing agent may be provided at some position of the circulation passage 59 in place of arranging the orifice 35.

Furthermore, the circulation passage 59 disposed between the injection module 30 and the storage tank 50 is provided so that reducing agent other than reducing agent injected from the reducing agent injection valve 31 of the injection module 30 is made to reflow into the storage tank 50 out of reducing agent pressure-fed from the pump module 40 in order to prevent the reducing agent from being affected by exhaust gas heat or the like and exposed to high temperature.

DCU 60 performs the operation control of the reducing agent injection valve 31 on the basis of various information existing on CAN 65 so that a proper amount of reducing agent is injected into the exhaust gas passage 11. Furthermore, DCU 60 in the embodiment of the present invention has a function as a trouble diagnosis device for the exhaust gas purification system 10 (hereinafter referred to as "trouble diagnosis device").

DCU 60 mainly comprises a microcomputer having a well-known construction, and in Fig. 1, constructions represented by functional blocks are shown with respect to parts concerning the operation control of the reducing agent injection valve 31, the driving control of the pump 41 and the trouble diagnosis of the exhaust gas purification system 10.
That is, DCU 60 in the embodiment of the present invention comprises, as main constituent elements, a CAN information taking and generating unit (represented as "CAN information take-out and generation" in Fig. 1), a trouble diagnosis unit of the exhaust gas purification system (represented by "system trouble diagnosis" in Fig. 1), a pump driving control unit (represented as "pump driving control" in Fig. 1), a reducing agent injection valve operation controller (represented as "Udv operation control" in Fig. 1), etc. Specifically, these parts are implemented by executing programs through the microcomputer (not shown).

The CAN information taking and generating unit reads information concerning the driving state of the internal combustion engine output from ECU 70, sensor information output from the NOₓ sensor 17 and information existing on CAN 65, and outputs these information onto the respective parts.
Furthermore, the pump driving controller continually reads information concerning the pressure of reducing agent in the second supply passage 58 which is output from the CAN information taking and generating unit, and executes feedback control on the pump 41 on the basis of the pressure information, so that the pressure of the reducing agent in the second supply passage 58 and the pressure chamber 33 is kept to a substantially fixed state. For example, in the case where the pump 41 is an electrically-operated pump, when the output pressure value is lower than a target value, the pump 41 is controlled so that the duty ratio of the electrically-operated pump is increased to increase the pressure. Conversely, when the output pressure value exceeds the target value, the pump 41 is controlled so that the duty ratio of the electrically-operated pump is reduced to lower the pressure.

The reducing agent injection valve operation controller reads the information concerning the reducing agent in the storage tank 50, the information concerning the exhaust gas temperature, the NOₓ catalyst temperature and the NOₓ concentration at the downstream side of the NOₓ catalyst, the information concerning the operation state of the internal combustion engine, etc. which are output from the CAN information taking and generating unit, generates a control signal for injecting from the reducing agent injection valve 31 reducing agent whose amount is required to reduce NOₓ contained in exhaust gas, and outputs the control signal to a reducing agent injection valve operation device (represented by "Udv operation device" in Fig. 1) 67 for operating the reducing agent injection valve 31.

Purification of exhaust gas by the exhaust gas purification system 10 constructed as shown in Fig. 1 is carried out as follows.
Under the operation of the internal combustion engine, the reducing agent in the storage tank 50 is pumped up by the pump 41, and pressure-fed to the injection module 30 side. At this time, the detection value of the pressure sensor 45 at the downstream side of the pump 41 provided to the pump module 40 is fed back. When the detection value is less than a predetermined value, the output of the pump 41 is increased. When the pressure value exceeds a predetermined value, the pressure is reduced by the pressure control valve 49. Accordingly, the pressure of the reducing agent pressure-fed to the injection module 30 side is controlled to be kept to a substantially fixed value.

Furthermore, the reducing agent pressure-fed from the pump module 40 to the injection module 30 flows into the pressure chamber 33 of the reducing agent and it is kept to substantially fixed pressure, whereby the reducing agent is injected into the exhaust gas passage 11 at all times when the reducing agent injection valve 31 is opened. Furthermore, the reducing agent reflows through the circulation passage 59 into the storage tank 50. Therefore, the reducing agent which is not injected into the exhaust gas passage 11 is stocked in the pressure chamber 33, and thus it is prevented from being exposed to high temperature with exhaust gas heat.

Under the state that the reducing agent is stocked in the pressure chamber 33 under a substantially fixed pressure value, DCU 60 determines the amount of reducing agent to be injected on the basis of information such as the operation state and exhaust gas temperature of the internal combustion engine, the temperature of the NOₓ catalyst 13 and the amount of NOₓ which is passed through the NOₓ catalyst 13 without being reduced and measured at the downstream side of the NOₓ catalyst 13, etc., generates the control signal corresponding to the determined reducing agent amount and outputs the control signal to the reducing agent injection valve operation device (not shown) . The duty control of the reducing agent injection valve 31 is performed by the reducing agent injection valve operation device, and a proper amount of reducing agent is injected into the exhaust gas passage 11. The reducing agent injected into the exhaust gas passage 11 flows into the NOₓ catalyst 13 while mixed in the exhaust gas, and used for the reductive reaction of NOₓ contained in the exhaust gas, whereby the purification of the exhaust gas is performed.

### (2) Trouble Diagnosis Device

Here, DCU 60 of the embodiment of the present invention is provided with a trouble diagnosis unit of the exhaust gas purification system 10. The trouble diagnosis unit of the exhaust gas purification system 10 compares the upstream-side NOₓ amount and downstream-side NOₓ amount of the NOₓ catalyst which pass within a predetermined time under the state that a predetermined condition is satisfied, and diagnoses whether the exhaust gas purification system operates normally.

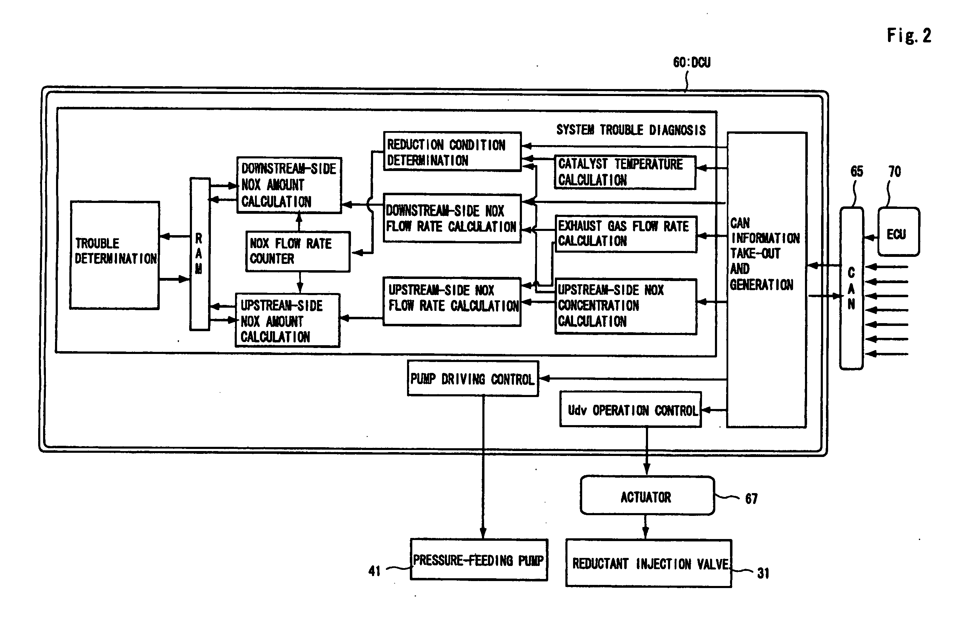

As shown in Fig. 2, the trouble diagnosis unit of the exhaust gas purification system has upstream-side NOₓ concentration calculating means for detecting the NOₓ concentration at the upstream side of the NOₓ catalyst (represented as "upstream-side NOₓ concentration calculation" in Fig. 2), upstream-side NOₓ flow rate calculating means for calculating the NOₓ flow amount at the upstream side of the NOₓ catalyst per unit time (represented as "upstream-side NOₓ flow rate calculation" in Fig. 2), upstream-side NOₓ amount calculating means for calculating the amount of NOₓ passing through the upstream side of the NOₓ catalyst within a predetermined time (represented as "upstream-side NOₓ amount calculation" in Fig. 2), downstream-side NOₓ flow rate calculating means for calculating the NOₓ flow rate at the downstream side of the NOₓ catalyst (represented as "downstream-side NOₓ flow rate calculation" in Fig. 2), and downstream-side NOₓ amount calculating means for calculating the amount of NOₓ passing through the downstream side of the NOₓ catalyst within a predetermined time (represented as "downstream-side NOₓ amount calculation" in Fig. 2).

The trouble diagnosis unit contains exhaust gas mass flow rate calculating means for calculating the mass flow rate of exhaust gas (represented as "exhaust gas mass flow rate calculation" in Fig. 2), catalyst temperature calculating means for calculating the temperature of the NOₓ catalyst from detection values of the temperature sensors at the upstream side and downstream side of the NOₓ catalyst (represented as "catalyst temperature calculation" in Fig. 2), reduction condition determining means for determining whether at least one condition for performing reduction of NOₓ is satisfied or not (represented as "reduction condition determination" in Fig. 2), and trouble determining means for determining the presence or absence of a trouble of the exhaust gas purification system by comparing the upstream-side NOₓ amount and the downstream-side NOₓ amount (represented as "trouble determination" in Fig. 2).

The exhaust gas mass flow rate calculating means reads information concerning the operation state of the internal combustion engine which is output from the CAN information taking and generating unit, and calculates the mass flow rate of the exhaust gas discharged from the internal combustion engine.
Furthermore, as in the case of the exhaust gas flow rate calculating means, the upstream-side NOₓ concentration calculating means reads information concerning the operation state of the internal combustion engine which is output from the CAN information taking and generating unit, and calculates the concentration of NOₓ discharged from the internal combustion engine.
A fuel injection amount, a rotational number, the status of an exhaust circulation device (EGR: Exhaust Gas Recirculation), an exhaust circulation amount, an air suction amount, a cooling water temperature, etc. are used as the information concerning the operation state of the internal combustion engine which is used to calculate the exhaust gas mass flow rate and calculate the concentration of NOₓ discharged from the internal combustion engine and exists on CAN. The calculation of the exhaust gas mass flow rate and the NOₓ concentration on the basis of these information can be performed by a well-known method.
In DCU 60 of this embodiment, the NOₓ concentration at the upstream side of the NOₓ catalyst is determined by the calculation. However, as in the case of the NOₓ concentration at the downstream side of the NOₓ catalyst, an NOₓ sensor may be disposed at the upstream side of the NOₓ catalyst and the detection value of the NOₓ sensor concerned is used although the cost may rise up.

The upstream-side NOₓ flow rate calculating means calculates the NOₓ flow amount at the upstream side of the NOₓ catalyst per unit time on the basis of the upstream-side NOₓ concentration calculated by the upstream-side NOₓ concentration calculating means described above and the exhaust gas mass flow rate. The upstream-side NOₓ amount calculating means integrates the NOₓ flow rate in a time zone satisfying a predetermined condition out of the NOₓ flow rate calculated by the upstream-side NOₓ flow rate calculating means, thereby integrating the NOₓ amount passing through the upstream side of the NOₓ catalyst within a predetermined time.
Furthermore, the downstream-side NOₓ flow rate calculating means calculates the NOₓ flow amount at the downstream side of the NOₓ catalyst per unit time on the basis of the NOₓ concentration detected by the NOₓ sensor disposed at the downstream side of the NOₓ catalyst and the exhaust gas mass flow rate, which are output from the CAN information taking and generating unit. The downstream-side NOₓ amount calculating means integrates the NOₓ flow rate in a time zone satisfying a predetermined condition out of the NOₓ flow rate calculated by the downstream-side NOₓ flow rate calculating means, thereby calculating the NOₓ amount passing through the downstream-side of the NOₓ catalyst within a predetermined time.

In DCU 60 of this embodiment, the upstream-side NOₓ amount calculating means and the downstream-side NOₓ amount calculating means integrate the NOₓ flow rate only when it is determined in reduction condition determining means that the system satisfies various conditions under which the reduction of NOₓ is normally performed. The temperature of the NOₓ catalyst, the concentration of exhausted NOₓ, the flow rate of the exhaust gas, etc. are used as the conditions for normally performing the reduction of NOₓ. It is an important element to the activation state of the catalyst whether the temperature of the NOₓ catalyst is within a predetermined range or not.
Whether the exhausted NOₓ concentration and the flow rate of the exhaust gas are within predetermined ranges is an important element to whether the flow rate of NOₓ flowing into the NOₓ catalyst is within a processing capacity range of the catalyst or not. That is, when the NOₓ flow rate is integrated although these conditions are not satisfied, the system is diagnosed to be broken down in spite of a situation that the reduction efficiently is merely low, and thus the reliability of the diagnosis result is lowered. Therefore, the integration is performed only when the above conditions are satisfied.

The reduction condition determining means determines whether the exhaust gas purification system satisfies the various conditions for normally performing the reduction of NOₓ, and outputs signals to the upstream-side NOₓ amount calculating means and the downstream-side NOₓ amount calculating means. These conditions contain the temperature of the NOₓ catalyst calculated by the catalyst temperature calculating means, the NOₓ concentration at the upstream side of the NOₓ catalyst calculated by the upstream-side NOₓ concentration calculating means, the exhaust gas mass flow rate calculated by the exhaust gas flow rate calculating means, etc. A condition range for normally performing the reduction of NOₓ in the NOₓ catalyst is defined in advance, and when these conditions are within the prescribed range, signals are output so that the upstream-side NOₓ amount calculating means and the downstream-side NOₓ calculating means integrate the NOₓ flow rate.

The catalyst temperature calculating means estimates the temperature of the NOₓ catalyst by using map or the like on the basis of the temperature information detected by the temperature sensors at the upstream side and downstream side of the NOₓ catalyst output from the CAN information taking and generating unit. Here, the estimated temperature information of the NOₓ catalyst is used as one of the conditions for normally performing the reduction of NOₓ.
Furthermore, RAM (Random Access Memory) is connected to the trouble diagnosis unit of DCU 60 of this embodiment, and the integration values of the NOₓ amounts which are calculated by the upstream-side NOₓ amount calculating means and the downstream-side NOₓ amount calculating means are stored on a case-by-case basis.

The trouble determining means reads the upstream-side NOₓ amount and the downstream-side NOₓ amount stored in RAM, and determines the ratio of the downstream-side NOₓ amount to the upstream-side NOₓ amount. In addition, the trouble determining means compares the reduction efficiency of NOₓ represented by this ratio with a predetermined threshold value to determine whether the system operates normally.
Furthermore, the trouble determining means is provided with an NOₓ flow rate counter. When the condition for normally performing the reduction of NOₓ is satisfied, the counter is subjected to addition processing. When the condition concerned is not satisfied, the counter is subjected to subtraction processing. The counter value is used to determine whether the integration value of the NOₓ flow rate is reliable to the extent that it can be used for the trouble diagnosis of the system.

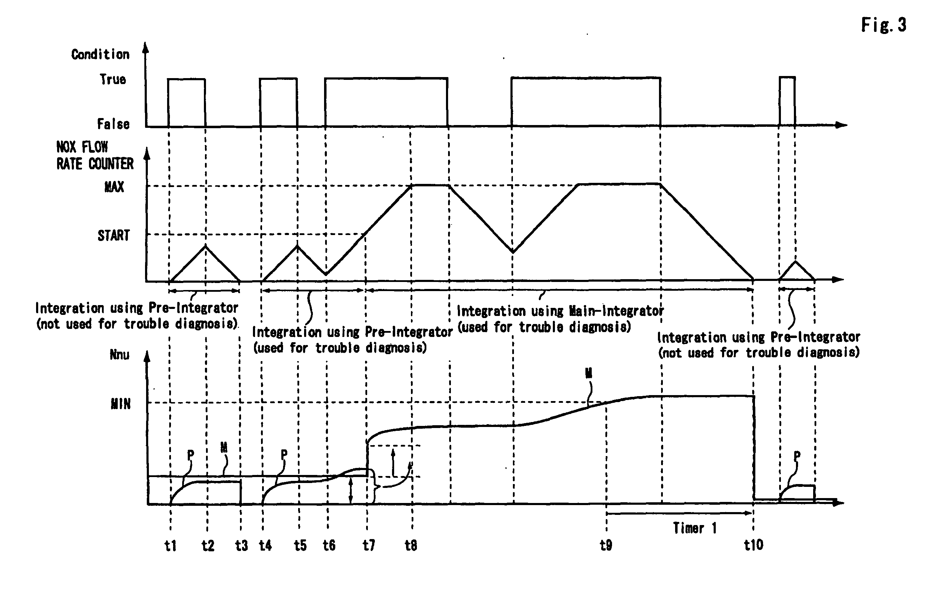

Furthermore, in order to define the maximum time until the state that the system does not satisfy the above condition is continued and the integration value of the NOₓ flow rate is reset, the value of the NOₓ flow rate counter is prevented from increasing to a predetermined value MAX or more. The addition rate of the NOₓ flow rate counter is increased when the NOₓ flow rate is high, and it is reduced when the NOₓ flow rate is low. This is because the reliability of the trouble diagnosis using the integration value of the NOₓ flow rate is more enhanced as the NOₓ flow rate is higher, and the time taken until the counter value is equal to zero by subjecting the counter to the subtraction processing can be lengthened.
For descriptive purposes, the timing chart of Fig. 3 is illustrated while the addition rate is set to be fixed.

### (3) Timing Chart

The upstream-side NOₓ flow rate and the downstream-side NOₓ flow rate are integrated in the trouble diagnosis device of this embodiment when the system satisfies various conditions for normally performing the reduction of NOₓ. Next, this will be described in detail with reference to the timing chart shown in Fig. 3.

First, when the state that the condition of normally performing the reduction of NOₓ is satisfied (the state that Condition is set to a state indicating True) is set at a time point of t1, the NOₓ flow rate counter is subjected to the addition processing (NOₓ flow rate counter Inc). The integration of the NOₓ flow rate at the upstream side of the NOₓ catalyst is started by Pre-Integrator of the upstream-side NOₓ amount calculating means at the time point of t1, and the integration is continued insofar as Condition is set to the state of True.

Thereafter, since the condition for normally performing the reduction of NOₓ is not satisfied at a time point of t2 (Condition is set to a state indicating False), the NOₓ flow rate counter is subjected to the subtraction processing (NOₓ flow rate counter Dec). The integration of the NOₓ flow rate at the upstream side which is continually performed is interrupted at the time point of t2. Subsequently, the NOₓ flow rate counter is also subjected to the subtraction processing, and the integration value which is integrated by Pre-Integrator is reset at a time point of t3 at which the counter value of the NOₓ flow rate counter is set to zero without exceeding a prescribed value START.

Subsequently, when Condition is set to True at a time point of t4 again, the addition processing of the NOₓ flow rate counter is resumed, and also the integration of the NOₓ flow rate at the upstream side of the NOₓ catalyst by Pre-Integrator is resumed. The state that Condition is set to True is continued between t4 and t5, and thus the integration of the NOₓ flow rate at the upstream side of the NOₓ catalyst is also continued. Thereafter, at a time point of t5, Condition is set to False. Therefore, as in the case of the time point of t2, the NOₓ flow rate counter is subjected to the subtraction processing, and also the integration of the NOₓ flow rate at the upstream side is interrupted.

Subsequently, at a time point of t6, Condition is set to True again before the NOₓ flow rate counter is equal to zero. Therefore, the NOₓ flow rate counter is subjected to the addition processing again, and also the integration of the upstream-side NOₓ flow rate by Pre-Integrator is resumed.
At this time, the NOₓ flow rate counter exceeds the prescribed value START at a time point of t7. Therefore, the integration value which is integrated by Pre-Integrator is added to Main-Integrator, and also the switching operation is carried out so that the subsequent integration is performed by Main-Integrator. In the time chart of Fig. 3, Main-Integrator is set so that the previous integration value has been already stored therein. By selectively using Pre-Integrator and Main-Integrator, the storage of the integration value is carried out by Main-Integrator, and the integration at the initial stage is carried out by Pre-Integrator. Therefore, when the NOₓ flow rate counter is reset at some midpoint at the initial stage of the integration, it can be returned to zero at all times.

Subsequently, at a time point of t8, the NOₓ flow rate counter exceeds the prescribed value MAX, and thus the NOₓ flow rate counter is fixed to MAX insofar as Condition is set to True. As described above, the value of the NOₓ flow rate counter is fixed to MAX at maximum in order to prevent such a situation that the time taken until the state that Condition is set to False is continued at some midpoint and thus the NOₓ flow rate counter is set to zero and thus reset and the time taken until the integration is finally finished are excessively lengthened, so that the determination precision is lowered and the time required for the trouble determination is lengthened.
Subsequently, the integration is interrupted under the state that Condition is set to False, and the integration of Main-Integrator is continued under the state that Condition is set to True.

Subsequently, a timer 1 is actuated at a time point of t9 at which the value of the integrated upstream-side NOₓ amount exceeds the prescribed value MIN. The integration of Main-Integrator is finished at a time point of t10 at which the period of the timer 1 is finished. With respect to the timing at which the integration of Main-Integrator is finished, even before the timer 1 is finished, the integration is finished when the period for which Condition indicates False is continued for a predetermined time after the value of the upstream NOₓ amount exceeds the prescribed value MIN.
As described above, The integration is finished after a predetermined time elapses from the time when the integration value of the upstream-side NOₓ flow rate exceeds the prescribed value MIN because after the prescribed value MIN corresponding to the lowest NOₓ integration amount is secured when the trouble determination is performed, the NOₓ integration amount is further accumulated so that a required time is not remarkably lengthened, thereby enhancing the determination precision.

### 2. Trouble Diagnosis Method for Exhaust Gas Purification System

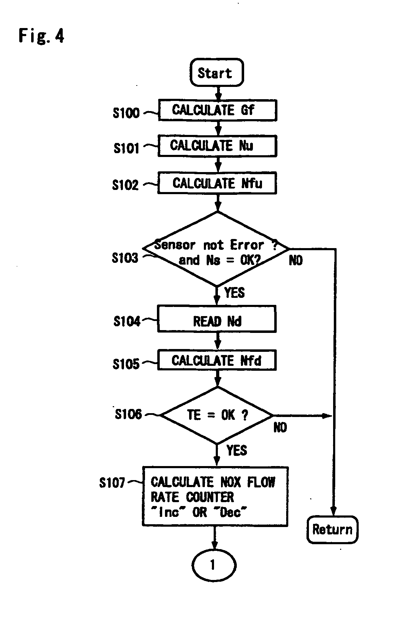

Next, a specific routine of the trouble diagnosis method for the exhaust gas purification system will be described with reference to the flowcharts of Figs. 4 to 6. This routine may be executed at all times, or it may be executed by interrupting every fixed time.

First, after the routine is started, the mass flow rate Gf of the exhaust gas discharged from the internal combustion engine is calculated in step S100, and then the NOₓ concentration in the exhaust gas discharged from the internal combustion engine, that is, the NOₓ concentration Nu at the upstream side of the NOₓ catalyst is calculated in step S101. Subsequently, in step S102, the NOₓ flow rate Nfu per unit time at the upstream side of the NOₓ catalyst is calculated on the basis of the mass flow rate Gf of the exhaust gas and the upstream-side NOₓ concentration Nu which are calculated in step S100 and step S101, and then the processing goes to step S103.

In step S103, it is determined whether there is no error information from the NOₓ sensor provided at the downstream side of the NOₓ catalyst and the input value from the NOₓ sensor is within a standard range of CAN. When these conditions are not satisfied, the processing is returned to the start position. When it is determined that both the conditions are satisfied, the processing goes to step S104.
In step S104, the NOₓ concentration Nd at the downstream side of the NOₓ catalyst which exists on CAN and is detected by the NOₓ sensor is read out, the NOₓ flow amount Nfd per unit time at the downstream side of the NOₓ catalyst is calculated on the basis of the NOₓ concentration Nd at the downstream side of the NOₓ catalyst read in step S104 and the mass flow rate Gf of the exhaust gas calculated in step S100 in step S105, and then the processing goes to step S106.

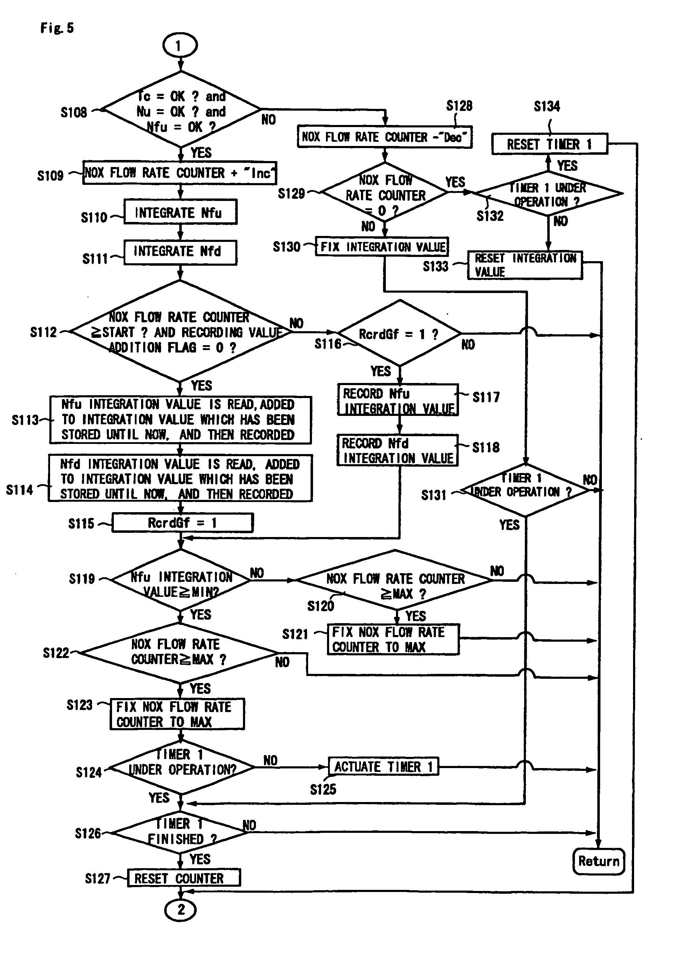

In step S106, as in the case of the step S103 described above, it is determined whether there is no error information from the NOₓ sensor and the input value from the NOₓ sensor is within the standard range of CAN, and also it is determined whether the system is set to an reducing agent-injection possible state (hereinafter referred to as "test environment condition TE"). When it is determined that the test environment condition TE is not satisfied, the system is not set to the test-possible state, and thus the processing is returned to the start position. On the other hand, when it is determined that the test environment condition TE is satisfied, the processing goes to step S107 to calculate the increase amount Inc or the decrease amount Dec of the NOₓ flow rate counter at the upstream side of the NOₓ catalyst, and then the processing goes to step S108 (Fig. 5).

In the step S108 to which the processing is shifted when the increase amount Inc or the decrease amount Dec of the NOₓ flow rate Nfu at the upstream side of the NOₓ catalyst is calculated, it is determined whether the temperature Tc of the NOₓ catalyst is within a prescribed range, the NOₓ concentration Nu at the upstream side of the NOₓ catalyst is within a prescribed range and the NOₓ flow rate Nfu at the upstream side of the NOₓ catalyst is within a prescribed range. When all of these conditions are satisfied, the processing goes to step S109, and the NOₓ flow rate counter is added by the amount corresponding to the increase amount Inc determined in step S107. Subsequently, the NOₓ flow rate Nfu at the upstream side of the NOₓ catalyst is integrated in step S110, the NOₓ flow rate Nfd at the downstream side of the NOₓ catalyst is integrated in step S111, and they are stored in RAM.

After the NOₓ flow rate Nfu at the upstream side of the NOₓ catalyst and the NOₓ flow rate Nfd at the downstream side of the NOₓ catalyst are stored, it is determined in step S112 whether the NOₓ flow rate counter reaches the prescribed value START and also a recording value addition flag RcrdGf is equal to zero. When all of them are satisfied, the processing goes to step S113 to read the stored integration value of the NOₓ flow rate Nfu at the upstream side of the NOₓ catalyst, add the read-out integration value to the previously accumulated integration value and also store the addition result into RAM again. Furthermore, in step S114, the stored integration value of the NOₓ flow rate Nfd at the downstream side of the NOₓ catalyst is read, added to the previously accumulated integration value and then stored into RAM again. Thereafter, the recording value addition flag RcrdGf is set to 1 in step S115, and then the processing goes to step S116.

On the other hand, when it is determined in step S112 that the NOₓ flow rate counter does not reach the prescribed value START or the recording value addition flag RcrdGf is not equal to zero, the processing goes to step S116, and it is determined whether the recording value addition flag RcrdGf is put up. When the recording value addition flag RcrdGf is not put up, the processing is returned to the start position. On the other hand, when the recording value addition flag RcrdGf is put up, the processing goes to step S117 to store the integration value Nnu of the NOₓ flow rate Nfu at the upstream side of the NOₓ catalyst, the integration value Nnd of the NOₓ flow rate Nfd at the downstream side of the NOₓ catalyst is stored in step S118, and then the processing goes to step S119.

In step S119 to which the processing is shifted when the recording value addition flag RcrdGf is put up, it is determined whether the integration value Nnu of the NOₓ flow rate Nfu at the upstream side of the NOₓ catalyst is equal to the prescribed value MIN or more. When the integration value Nnu of the NOₓ flow rate Nfu is less than the prescribed value MIN, the processing goes to step S120 to determine whether the NOₓ flow rate counter reaches the prescribed MAX. When the NOₓ flow rate counter does not reach the prescribed value MAX, the processing is directly returned to the start position. On the other hand, when the NOₓ flow rate counter reaches the prescribed value MAX, the counter value is fixed to MAX in step S121, and the processing is returned to the start position.

On the other hand, when the integration value Nnu of the NOₓ flow rate Nfu is equal to MIN or more, the processing goes to step S122 to determine whether the NOₓ flow rate counter reaches the prescribed value MAX. When the NOₓ flow rate counter does not reach the prescribed value MAX, the processing is returned to the start position again. On the other hand, when the NOₓ flow rate counter reaches the prescribed value MAX, the NOₓ flow rate counter is fixed to the prescribed value MAX in step S123, and the processing goes to step S124.

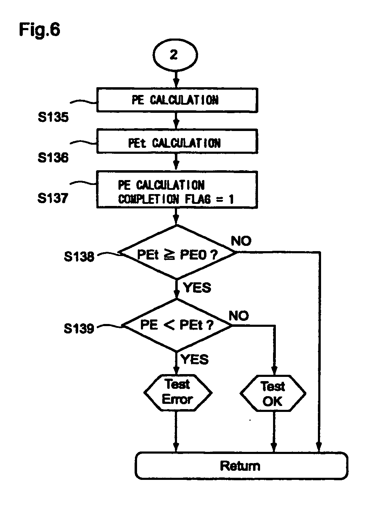

In step S124 to which the processing is shifted when the integration value Nnu of the NOₓ flow rate Nfu is equal to MIN or more and the NOₓ flow rate counter is fixed to MAX, it is determined whether the timer 1 is under operation. When the timer 1 is stopped, the timer 1 is actuated in step S125, and then the processing is returned to the start position. On the other hand, when the timer 1 is under operation, the processing goes to step S126.
Subsequently, in step S126, it is determined whether the timer 1 is finished. When the timer 1 is not finished, the processing is returned to the start position. On the other hand, when the timer 1 is finished, the NOₓ flow rate counter is reset in step S127, and then the processing goes to step S135 (Fig. 6).

On the other hand, when all the conditions are not satisfied in step S108, the processing goes to step S128 to subject the NOₓ flow rate counter to the subtraction processing by the amount corresponding to Dec determined in step S107.
Subsequently, in step S129, it is determined whether the NOₓ flow rate counter is equal to zero or not. When the NOₓ flow rate counter is not equal to zero, the integration value is fixed in step S130, and it is determined whether the timer 1 is under operation or not in step S131. When the timer 1 is stopped, the processing is returned to the start position, and when the timer 1 is under operation, the processing goes to step S126. On the other hand, when the NOₓ flow rate counter is equal to zero, the processing goes to step S132, and it is determined whether the timer 1 is under operation. When the timer 1 is stopped, the integration values Nnu and Nud are reset in step S133, and then the processing is returned to the start position. When the timer 1 is under operation, the timer 1 is reset in step S134, and then the processing goes to step S135 (Fig. 6).

In step S135, the integration value Nnu of the NOₓ flow rate Nfu at the upstream side of the NOₓ catalyst is compared with the integration value Nnd of the NOₓ flow rate Nfd at the downstream side of the NOₓ catalyst to calculate the actual NOₓ reduction coefficient PE. Subsequently, in step S136, a threshold value PEt for the NOₓ purification coefficient which will be originally obtained is calculated and set on the basis of parameter values concerning the reduction of NOₓ under a condition under which the integration has been performed, a reduction coefficient calculation completion flag is put up in step S137, and then the processing goes to step S138.

In step S138, it is determined whether the threshold value PEt of the NOₓ reduction coefficient determined in step S136 is equal to a prescribed value PE0 or more. When PEt is smaller than the prescribed value PE0, the processing is returned to the start position. On the other hand, when PEt is larger than the prescribed value PE0, the processing goes to step S139 to determine whether the actual NOₓ reduction coefficient PE is smaller than the threshold value determined in step S136. When PE is smaller than the threshold value PEt, TestError is set because the NOₓ reduction coefficient is lowered, and the diagnosis is finished. On the other hand, when PE is larger than the threshold value PEt, TestOK is set because the NOₓ purification coefficient is kept to a predetermined value or more, and the diagnosis is finished.

According to the trouble diagnosis method for the exhaust gas purification system based on the flowchart described above, the purification efficiency can be calculated by integrating the NOₓ amounts at the upstream side and downstream side of the NOₓ catalyst under the state that the condition for normally performing the reductive reaction of NOₓ is satisfied. Accordingly, the presence or absence of a trouble of the exhaust gas purification system such as the abnormality of the control system of the exhaust gas purification system, the deterioration of the NOₓ catalyst, the reduction in quality of the reducing agent, etc. can be accurately determined.

The construction of the exhaust gas purification system shown in Fig. 1 is an example, and the exhaust gas purification system which can implement the trouble diagnosis method of the present invention is not limited to the thus-constructed exhaust gas purification system. For example, CAN may be omitted or DCU may be constructed to be integral with the engine ECU. Furthermore, as another example, the exhaust gas purification system may be constructed so that the circulation passage provided for the purpose of the temperature control of the reducing agent is omitted.

## Claims

1. A trouble diagnosis device for an exhaust gas purification system (10) for passing exhaust gas discharged from an internal combustion engine through NOₓ catalyst (13) to reduce NOₓ contained in the exhaust gas, the trouble diagnosis device comprising:
upstream-side NOₓ flow rate (Nfu) calculating means for calculating the flow amount of upstream-side NOₓ flow amount per unit time at the upstream side of the NOₓ catalyst (13);
downstream-side NOₓ flow rate (Nfd) calculating means for calculating a downstream-side NOₓ flow amount per unit time at the downstream side of the NOₓ catalyst (13);
reduction condition determining means for determining whether at least one condition for performing normal reduction of NOₓ is satisfied;
upstream-side NOₓ flow amount calculating means for integrating the upstream-side NOₓ flow amount to calculate the amount of upstream-side NOₓ passing through the upstream side of the NOₓ catalyst (13) within a predetermined time when the condition concerned is determined to be satisfied;
downstream-side NOₓ amount calculating means for integrating the downstream-side NOₓ flow amount to calculate the amount of downstream- side NOₓ passing through the downstream side of the NOₓ catalyst (13) within the predetermined time when the condition concerned is determined to be satisfied; and
trouble determining means for comparing the upstream-side NOₓ amount and the downstream-side NOₓ amount to determine whether the exhaust gas purification system (10) operates normally.

2. The trouble diagnosis device for the exhaust gas purification system (10) according to claim 1, wherein the upstream-side NOₓ amount calculating means and the downstream-side NOₓ amount calculating means store the integration values which have been obtained till now when the integration of the NOₓ flow amount is interrupted, and resume the integration from the stored integration values when the condition concerned is satisfied again.

3. The trouble diagnosis device for the exhaust gas purification system (10) according to claim 1 or 2, wherein the upstream-side NOₓ amount calculating means and the downstream-side NOₓ amount calculating means store the integration values which have been obtained till now when the integration of the NOₓ is interrupted, and reset the integration values when the condition concerned is not satisfied again within a predetermined time.

4. The trouble diagnosis device for the exhaust gas purification system (10) according to any one of claims 1 to 3, wherein the trouble determining means finishes the integration of the upstream-side NOₓ flow amount and the downstream-side NOₓ flow amount when the upstream-side NOₓ amount reaches a predetermined value, and compares the upstream-side NOₓ amount and the downstream-side NOₓ amount.

5. The trouble diagnosis device for the exhaust gas purification system (10) according to any one of claims 1 to 4, wherein the trouble determining means compares the ratio between the upstream-side NOₓ amount and the downstream-side NOₓ amount with a threshold value which is determined in accordance with a condition under which reduction of NOₓ is normally performed for determination.

6. The trouble diagnosis device for the exhaust gas purification system (10) according to any one of claims 1 to 5, wherein the upstream-side NOₓ flow rate (Nfu) calculating means performs the calculation on the basis of an NOₓ concentration discharged from the internal combustion engine which is calculated from an operation state of the internal combustion engine.

7. A trouble diagnosis method for an exhaust gas purification system (10) for diagnosing the presence or absence of a trouble of an exhaust gas purification system (10) in which exhaust gas discharged from an internal combustion engine is passed through NOₓ catalyst (13) to reduce NOₓ contained in the exhaust gas, the method comprising:
calculating an upstream-side NOₓ flow amount and a downstream-side NOₓ flow amount per unit time at the upstream and downstream sides of the NOₓ catalyst (13);
determining whether at least one condition under which the reduction of NOₓ is normally performed is satisfied or not; integrating the upstream-side NOₓ flow amount and the downstream-side NOₓ flow amount when the condition concerned is satisfied, and calculating an upstream-side NOₓ amount and the downstream-side NOₓ amount passing through the upstream side and the downstream side of the NOₓ catalyst (13) within a predetermined time; and
comparing the upstream-side NOₓ amount with the downstream-side NOₓ amount to determine whether the exhaust gas purification system (10) operates normally.

## Patentansprüche

1. Eine Versagensdiagnosevorrichtung für ein Abgasreinigungssystem (10) zum Durchleiten von Abgas, das von einer Verbrennungskraftmaschine ausgestoßen wird, durch einen NOₓ-Katalysator (13), um im Abgas enthaltenes NOₓ zu reduzieren, wobei die Versagensdiagnosevorrichtung aufweist:
eine Einrichtung, welche die zustromseitige NOₓ-Strömungsmenge (Nfu) berechnet, zum Berechnen der zustromseitigen NOₓ-Strömungsmenge pro Zeiteinheit auf der Zustromseite des NOₓ-Katalysators (13);
eine Einrichtung, welche die abstromseitige NOₓ-Strömungsmenge (Nfd) berechnet, zum Berechnen einer abstromseitigen NOₓ-Strömungsmenge pro Zeiteinheit auf der Abstromseite des NOₓ-Katalysators (13);
eine Einrichtung, welche Reduktionsbedingungen bestimmt, zum Bestimmen, ob mindestens eine Bedingung für die Durchführung einer normalen Reduktion von NOₓ erfüllt ist;
eine Einrichtung, welche die zustromseitige NOₓ-Strömungsmenge berechnet, zum Integrieren der zustromseitigen NOₓ-Strömungsmenge, um die Menge des zustromseitigen NOₓ, die durch die Zustromseite des NOₓ-Katalysators (13) strömt, innerhalb einer vorher bestimmten Zeit zu berechnen, wenn festgestellt worden ist, dass die entsprechende Bedingung erfüllt ist;
eine Einrichtung, welche die abstromseitige NOₓ-Strömungsmenge berechnet, zum Integrieren der abstromseitigen NOₓ-Strömungsmenge, um die Menge des abstromseitigen NOₓ, die durch die Abstromseite des NOₓ-Katalysators (13) strömt, innerhalb der vorher bestimmten Zeit zu berechnen, wenn festgestellt worden ist, dass die entsprechende Bedingung erfüllt ist;
eine Versagensbestimmungseinrichtung zum Vergleichen der zustromseitigen NOₓ-Menge und der abstromseitigen NOₓ-Menge, um zu bestimmen, ob das Abgasreinigungssystem (10) normal arbeitet.

2. Versagensdiagnosevorrichtung für das Abgasreinigungssystem (10) gemäß Anspruch 1, bei der die Einrichtung, welche die zustromseitige NOₓ-Menge berechnet, und die Einrichtung, welche die abstromseitige NOₓ-Menge berechnet, die Integrationswerte speichern, die bis zum gegenwärtigen Zeitpunkt erhalten worden sind, wenn die Integration der NOₓ-Strömungsmenge unterbrochen wird, und die Integration aus den gespeicherten Integrationswerten wieder aufnehmen, wenn die entsprechende Bedingung wieder erfüllt ist.

3. Versagensdiagnosevorrichtung für das Abgasreinigungssystem (10) gemäß Anspruch 1 oder 2, bei der die Einrichtung, welche die zustromseitige NOₓ-Menge berechnet, und die Einrichtung, welche die abstromseitige NOₓ-Menge berechnet, die Integrationswerte speichern, die bis zum gegenwärtigen Zeitpunkt erhalten worden sind, wenn die Integration des NOₓ unterbrochen wird, und die Integrationswerte zurücksetzen, wenn die entsprechende Bedingung innerhalb einer vorher bestimmten Zeit nicht wieder erfüllt ist.

4. Versagensdiagnosevorrichtung für das Abgasreinigungssystem (10) gemäß irgendeinem der Ansprüche 1 bis 3, bei der die Versagensbestimmungseinrichtung die Integration der zustromseitigen NOₓ-Strömungsmenge und der abstromseitigen NOₓ-Strömungsmenge beendet, wenn die zustromseitige NOₓ-Menge einen vorher bestimmten Wert erreicht, und die zustromseitige NOₓ-Menge und die abstromseitige NOₓ-Menge vergleicht.

5. Versagensdiagnosevorrichtung für das Abgasreinigungssystem (10) gemäß irgendeinem der Ansprüche 1 bis 4, bei der die Versagensbestimmungseinrichtung das Verhältnis zwischen der zustromseitigen NOₓ-Menge und der abstromseitigen NOₓ-Menge mit einem Schwellenwert vergleicht, der entsprechend einer Bedingung bestimmt wird, unter der eine Reduktion von NOₓ zur Bestimmung normalerweise durchgeführt wird.

6. Versagensdiagnosevorrichtung für das Abgasreinigungssystem (10) gemäß irgendeinem der Ansprüche 1 bis 5, bei der die Einrichtung, welche die zustromseitige NOₓ-Strömungsmenge (Nfu) berechnet, die Berechnung auf der Basis einer von der Verbrennungskraftmaschine ausgestoßenen NOₓ-Konzentration durchführt, die aus einem Betriebszustand der Verbrennungskraftmaschine berechnet wird.

7. Ein Versagensdiagnoseverfahren für ein Abgasreinigungssystem (10) zum Diagnostizieren des Vorliegens oder Nichtvorliegens eines Versagens eines Abgasreinigungssystems (10), in dem von einer Verbrennungskraftmaschine ausgestoßenes Abgas durch den NOₓ-Katalysator (13) geleitet wird, um das im Abgas enthaltende NOₓ zu reduzieren, wobei das Verfahren aufweist:
Berechnen einer zustromseitigen NOₓ-Strömungsmenge und einer abstromseitigen NOₓ-Strömungsmenge pro Zeiteinheit auf der Zustrom- und auf der Abstromseite des NOₓ-Katalysators (13);
Bestimmen, ob mindestens eine Bedingung, unter der die Reduktion von NOₓ normalerweise durchgeführt wird, erfüllt ist oder nicht;
Integrieren der zustromseitigen NOₓ-Strömungsmenge und der abstromseitigen NOₓ-Strömungsmenge, wenn die entsprechende Bedingung erfüllt ist, und Berechnen einer zustromseitigen NOₓ-Menge und der abstromseitigen NOₓ-Menge, die durch die Zustromseite und die Abstromseite des NOₓ-Katalysators (13) strömt, innerhalb einer bestimmten Zeit; und
Vergleichen der zustromseitigen NOₓ-Menge mit der abstromseitigen NOₓ-Menge, um zu bestimmen, ob das Abgasreinigungssystem (10) normal arbeitet.

## Revendications

1. Dispositif de détection de panne d'un système de nettoyage de gaz d'échappement (10), traversé par les gaz d'échappement d'un moteur à combustion interne passant dans un catalyseur d'oxydes d'azote NOₓ (13) pour réduire la teneur en oxydes d'azote NOₓ contenus dans les gaz d'échappement, dispositif de détection de panne comprenant:
- un moyen de calcul de la quantité amont débitée d'oxydes d'azote NOₓ (Nfu) pour calculer le débit amont d'oxydes d'azote NOₓ, par unité de temps du côté amont du catalyseur d'oxydes d'azote NOₓ (13),
- un moyen de calcul de la quantité aval débitée d'oxydes d'azote NOₓ (Nfd) pour calculer le débit aval d'oxydes d'azote NOₓ par unité de temps du côté aval du catalyseur d'oxydes d'azote NOₓ (13),
- un moyen déterminant les conditions réductrices pour déterminer si au moins une condition pour effectuer la réduction normale des oxydes d'azote NOₓ, est satisfaite,
- un moyen de calcul du débit amont d'oxydes d'azote NOₓ pour intégrer le débit amont d'oxydes d'azote NOₓ et calculer la quantité d'oxydes d'azote NOₓ passant à travers le côté amont du catalyseur d'oxydes d'azote NOₓ (13), pendant une période prédéterminée lorsque la condition concernée est définie comme étant satisfaite,
- un moyen de calcul du débit aval d'oxydes d'azote NOₓ pour intégrer le débit aval d'oxydes d'azote NOₓ et calculer la quantité d'oxydes d'azote NOₓ passant à travers le côté aval du catalyseur d'oxydes d'azote NOₓ (13) dans la période de temps prédéterminée, si la condition concernée est définie comme satisfaite, et
- un moyen pour déterminer une panne, comparant la quantité amont d'oxydes d'azote NOₓ et la quantité aval d'oxydes d'azote NOₓ pour déterminer si le système de purification de gaz d'échappement (10) fonctionne correctement.

2. Dispositif de diagnostic de panne pour un système de nettoyage de gaz d'échappement (10) selon la revendication 1, **caractérisé en ce que** le moyen de calcul de la quantité amont d'oxydes d'azote NOₓ et le moyen de calcul de la quantité aval d'oxydes d'azote NOₓ, comprend un moyen pour enregistrer des valeurs intégrées obtenues jusqu'alors si l'intégration du débit d'oxydes d'azote NOₓ est interrompue et que recommence l'intégration des valeurs d'intégration enregistrées si la condition concernée est remplie de nouveau.

3. Dispositif de diagnostic de panne applicable un système de nettoyage de gaz d'échappement (10) selon la revendication 1 ou 2, **caractérisé en ce que** le moyen de calcul de la quantité amont d'oxydes d'azote NOₓ et le moyen de calcul de la quantité aval d'oxydes d'azote NOₓ, enregistre les valeurs d'intégration obtenues jusqu'alors, si l'intégration des oxydes d'azote NOₓ est interrompue et remise à l'état initial des valeurs d'intégration si la condition concernée n'est pas satisfaite de nouveau dans une période prédéterminée.

4. Dispositif de diagnostic de panne pour un système de nettoyage de gaz d'échappement (10) selon l'une des revendications 1 à 3, **caractérisé en ce que** le moyen de détermination de panne termine l'intégration du débit amont d'oxydes d'azote NOₓ et du débit aval d'oxydes d'azote NOₓ, si la quantité amont NOₓ atteint une valeur prédéterminée et il compare la quantité amont d'oxydes d'azote NOₓ et celle côté aval.

5. Dispositif de diagnostic de panne pour un système de nettoyage de gaz d'échappement (10) selon l'une des revendications 1 à 4, **caractérisé en ce que** le moyen pour déterminer la panne, compare le rapport entre la quantité amont d'oxydes d'azote NOₓ et la quantité aval d'oxydes d'azote NOₓ avec une valeur de seuil qui se définit selon une condition suivant laquelle, la réduction des oxydes d'azote NOₓ est normalement effectuée pour la détermination.

6. Dispositif de diagnostic de panne pour un système de nettoyage de gaz d'échappement (10) selon l'une des revendications 1 à 5, **caractérisé en ce que** le moyen de calcul de la quantité amont débitée d'oxydes d'azote NOₓ (Nfu) effectue le calcul sur la base d'une concentration d'oxydes d'azote NOₓ évacuée du moteur à combustion interne qui se calcule à partir d'un état de fonctionnement du moteur à combustion interne.

7. Procédé de diagnostic de panne applicable à un système de nettoyage de gaz d'échappement (10) pour diagnostiquer l'existence ou non d'une panne du système de purification des gaz d'échappement (10) selon lequel, les gaz d'échappement évacués par le moteur à combustion interne traversent un catalyseur d'oxydes d'azote NOₓ (13) pour réduire la teneur en oxydes d'azote NOₓ dans les gaz d'échappement, procédé comprenant les étapes suivantes :
- on calcule le débit amont d'oxydes d'azote NOₓ et le débit aval d'oxydes d'azote NOₓ par une unité de temps pour le côté amont et le côté aval du catalyseur d'oxydes d'azote NOₓ (13),
- on détermine si au moins une condition de réduction normale des oxydes d'azote NOₓ est satisfaisante ou non,
- on intègre le débit amont d'oxydes d'azote NOₓ et le débit aval d'oxydes d'azote NOₓ, si la condition concernée est satisfaite et on calcule la quantité amont d'oxydes d'azote NOₓ et la quantité aval d'oxydes d'azote NOₓ passant à travers le côté amont et le côté aval du catalyseur d'oxydes d'azote NOₓ (13) dans une période de temps prédéterminée, et
- on compare la quantité amont d'oxydes d'azote NOₓ à la quantité aval d'oxydes d'azote NOₓ pour déterminer si le système de nettoyage des gaz d'échappement (10) fonctionne correctement.
